# EUROPEAN PATENT SPECIFICATION

(11) **EP 1 314 527 B1**
(45) Date of publication and mention of the grant of the patent: **26.08.2009**
(21) Application number: 02025537.8
(22) Date of filing: 13.11.2002
(51) Int. Cl.: B29C 35/08, B29D 11/00

(54) **Contact lens manufacture using UV light**
Herstellung von Kontaktlinsen mit UV-Licht
Fabrication de lentilles de contact utilisant des rayonnements UV

(30) Priority: 14.11.2001 EP 01127001
(43) Date of publication of application: 28.05.2003
(73) Proprietor: NOVARTIS AG, 4056 Basel (CH)
(72) Inventor: Heinrich, Axel, 63743 Aschaffenburg (DE); Seiferling, Bernhard, 63773 Goldbach (DE); Haberstroh, Klaus, 78351 Bodman-Ludwigshafen (DE)
(74) Representative: Bohest AG

(56) References cited:
- WO-A-01/00393
- US-A- 5 529 728

## Description

The invention relates to a method and apparatus for producing mouldings, in particular ophthalmic lenses, such as contact lenses for example, according to the precharacterizing clause of the respective independent patent claim.

In many processes for producing mouldings, light is used, for example for initiating chemical reactions. This applies in particular (but not exclusively) to the production of contact lenses, in particular to the production of what are known as "disposable contact lenses", which - as their name suggests - are intended for wearing once and are thrown away after wearing. These disposable contact lenses are produced more or less fully automatically in a highly automated production process. The principle of such a production process is described, for example, in WO-A-98142497.

US 5,529,728 discloses a method, apparatus and composition for making and coating a plastic lens. The method includes disposing a liquid composition and a photosensitive initiator into a mold cavity and directing ultraviolet light to act on the lens forming material in the cavity to produce a lens therefrom.

In that part of the production process which is of particular significance for the present invention, after closing of the mould or the mould tool, in which a number of moulds are arranged, the starting material (which comprises, for example, a prepolymer and a photoinitiator) previously introduced into the respective contact lens mould - usually the female mould half - is exposed to UV light of a specific intensity over a specific period of time, whereby a polymerization and/or crosslinking of the starting material takes place, so that subsequently the mould contains a contact lens which, given an appropriate configuration of the mould, does not have to undergo any finishing operations. Both the intensity and the total amount of UV light which acts on the starting material are of fundamental significance here with regard to a high quality of the contact lenses to be produced.

The UV light emitted by the light source - for example a mercury UV lamp - is guided to the individual moulds by light guides, for example according to WO-A-01/00393. Used here in particular are liquid light guides, which have particularly good properties compared with quartz light guides of the same diameter, both with respect to the transmission of UV light and with respect to the usable cross-sectional area and the homogeneous intensity distribution of the emerging UV light. Preferably, each mould is in this case assigned a separate light guide. Since the temperature of such a UV lamp in the direct proximity of the lamp is often so high that it is intolerable for liquid light guides, the UV light emerging from the lamp is initially coupled into a quartz rod, with the space around the lamp, and consequently the quartz rod, being cooled, for example by a stream of air. As the light proceeds along the light path, the UV light emerging from the quartz rod impinges on a filter, which blocks components of light below a lower cut-off wavelength. This measure is beneficial because, on the one hand, the blocked short wavelengths can lead to accelerated aging of the liquid light guides and, on the other hand, by blocking the short wavelengths, the filter also prevents polymer degradation of the lens material. Arranged in the light path downstream of the filter is a - for example motor-operated - adjustable diaphragm, with which it is possible to control the amount of light to be coupled into the liquid light guide arranged downstream of the diaphragm in the light path, that is to couple either more or less light into the light guide. The liquid light guide transports the (filtered) light to its end, facing the mould, from which the light emerges and acts on the respective mould or the starting material located in it by means of a condenser.

Some of the elements mentioned, for example the filter, the light guides and the UV lamp, are subject to aging processes, so that their properties may change, sometimes considerably, over time. If the properties of individual elements or a plurality of elements change, the intensity of the UV light which acts on the starting material in the mould may also change. On the other hand, however, it is important for a uniformly high quality of the contact lenses - as already explained above - that both the intensity and the total amount of the UV light which acts on the starting material in the mould lie within a certain range. The total amount of the UV light to which the starting material is exposed is obtained from the integral of the intensity over the time period over which the starting material is exposed to the UV light.

In the case of synchronized production processes, the starting material is always exposed to the UV light over a constant time period within a cycle. In such a case, changes in intensity always also automatically result in a change in the total amount of the UV light which acts on the starting material, which can have the consequences already mentioned above.

In the production of relatively large lots of contact lenses, it has been the practice until now for sensors to be passed under the light guides and the intensity of the UV light emerging from the light guides to be measured, and set if need be, before starting and after completing the production of the lot. This operation can take several minutes, which are not available for production because the installation must be at a standstill during this time. What is more, in the case of a relatively long period of light exposure, especially at high intensities, the sensors undergo considerable loading, so that, when this operation is carried out, they can sometimes either become unserviceable or their sensitivity can change.
Then, new sensors have to be used or the sensors have to be re-calibrated. The measuring and setting have to be repeated, which takes additional time. Even if these disadvantages were disregarded, this procedure still has a further disadvantage: that is that, if it has been found during the measurement after completing the production of the lot that the intensity is significantly below or above the permissible range for the intensity, the entire lot of contact lenses has been rejected. Although such rejections of entire lots of contact lenses do not occur all that often if the intensity is carefully set at the beginning of production, even if it occurs only occasionally such a rejection of an entire lot of contact lenses nevertheless represents an appreciable deterioration in the efficiency of the production process.

Therefore, it is an object to propose measures which can be used to increase the efficiency of such a production process.

This object is achieved by the method according to the invention and the apparatus according to the invention as they are specified by the features of the respective independent patent claim. Particularly advantageous refinements of the method and developments of the apparatus emerge from the features of the dependent patent claims.

In particular, in the case of the method, a starting material located in a mould is polymerized and/or crosslinked by means of exposure to light, specifically by exposure to UV light, so that a demouldable moulding is produced. The measurement of the intensity of the light takes place during the production of the mouldings, for example the ophthalmic lenses or contact lenses. As a result, the intensity of the light which brings about the polymerization and/or the crosslinking is monitored virtually "in-process", that is during the production of the contact lenses (almost as it were "on-line"), so that intervention may be made if need be during the production process and, if there are changes in the intensity during the production of a lot of contact lenses, the entire lot does not have to be rejected. In particular, suitable measures can be taken during the production process to bring the intensity back into the permissible range.

In the method according to the invention, the mould is transported to a position in which the starting material located in the mould is exposed to the light. After exposure of the starting material to the light, the mould is transported away again from this position. The measurement of the intensity of the light takes place either during the transporting of the mould into the position in which the starting material located in the mould is exposed to the light or during the transporting of the mould away from this position. This is an efficient way in which the production process does not have to be interrupted and nevertheless the intensity of the light at the particular time can be measured.

In an advantageous embodiment of the method, a plurality of moulds are used simultaneously and the starting material located in these moulds (100, 110; 100a, 110a) is exposed to light simultaneously. The measurement of the intensity takes place before or after the exposure of the starting material to light, but before or after starting material in further moulds is exposed. This embodiment is distinguished by efficiency.

In a further embodiment of the method, a specific number of moulds arranged to follow one behind the other are used and a measuring device with a number and arrangement of sensors corresponding to the number and arrangement of moulds is used. In this way, the number of mouldings, for example contact lenses, which can be simultaneously produced in each case can be fixed, and the intensity of the light can be determined immediately after or before an exposure, without any additional effort.

In the case of a further advantageous embodiment of the method, a mould tool in which a plurality of moulds are arranged is used. For polymerization and/or crosslinking, the starting material is simultaneously exposed to light in all the moulds arranged in the mould tool. This embodiment is likewise of advantage with respect to the efficient production of relatively large numbers of mouldings such as the disposable contact lenses mentioned at the beginning, because in this way a relatively large number of contact lenses can be produced simultaneously and with consistently high quality.

In the case of a development of this embodiment of the method, a mould tool which is arranged on a base plate with a clearance is used. Through this clearance, the intensity of the light is measured while the mould tool or the base plate is being transported into the position in which the starting material located in the moulds is exposed to light, or while the mould tool or the base plate is being transported away from this position. Consequently, an efficient intensity measurement takes place while the mould tool or the base plate is being transported into position or transported away, it being possible for the time period during which the intensity can be measured to be fixed by the dimensioning of this clearance in the direction of transport of the mould tool and by the transporting speed.

In the case of a further advantageous embodiment, the light is transported from a light source to the mould in which the starting material is located by a separate supply line in each case. Depending on whether only one or - as described above - a plurality of moulds is/are being exposed simultaneously, a separate supply line is provided for the mould or for each mould. The various "channels" for the light are consequently independent of one another and the intensity of the light in each channel can consequently be influenced independently of the other channels, if so required.

A supply line with a light guide on which the light-exiting end is arranged in such a way that the light emerging from the light guide acts on the starting material located in the respective mould is preferred. The light guide may, in particular, be a liquid light guide which is distinguished by its good properties with respect to the conduction of UV light, which is used with preference in the case of a practical variant of the method.

It is particularly preferred for the intensity of the light transported to the mould to be measured separately for each individual supply line, whereby - as already explained above - each "channel" can be monitored separately and the intensity in each individual channel can also be controlled separately.

In the case of a further embodiment of the method, a lamp operated on alternating current, preferably a mercury UV lamp, is used as the light source. Since the intensity of a lamp operated in this way is respectively described by half-periods, it being possible for the characteristic and the amplitude in the respective half-periods to be quite different, an even number of half-periods is taken into account in each case in the measurement of the intensity. Over the time period of the even number of half-periods taken into account, the momentary values of the intensity are added up and subsequently divided by this time period. As a result, a value for the average intensity of the light which acts on the respective mould and the starting material located in it over a relatively large segment of time is obtained. If there are various channels, this measurement can take place channel by channel and the intensity of the light can be influenced for each channel independently of the intensity in the other channels.

In the case of a further advantageous embodiment, the total amount of the light which acts on the starting material located in the mould is determined in addition to the measurement of the intensity of the light. As already explained at the beginning, not only the intensity with which the starting material is exposed, but often also the (area-related) total amount of the light which acts on the starting material in the mould is a critical variable. If the intensity has once been determined, the respective (area-related) total amount of the light which acts on the starting material in the mould can be determined in a simple way from the intensity, by multiplying the intensity by the time period for which the starting material is exposed to the light.

In the case of a further advantageous embodiment, a warning signal is generated whenever the measured intensity and/or the specific total amount of the light goes above a first upper threshold value or goes below a first lower threshold value. If the measured intensity and/or the specific total amount of the light goes above a second upper threshold value or goes below a second lower threshold value, a fault signal is generated. If a warning signal and/or a fault signal occurs, suitable measures are initiated. If a warning signal occurs, this may initially mean that, in the case of a plurality of channels, the corresponding channel is monitored more closely for a short time and, if the intensity is unchanged, a corrective intervention is made in this channel, in that for example the intensity is increased or reduced, depending on whether the intensity and/or total amount of light has gone below or above its first threshold value. If a fault signal occurs, this may mean that either the installation must be stopped or the corresponding contact lenses produced with the faulty channel must be segregated from the rest until the fault has been rectified.

In the case of a further advantageous configurational embodiment, the mould (to be precise both mould halves) is formed such that it is transparent to the light, and the light passing through the mould during crosslinking is received and used for the purpose of identifying instances of contamination or changes on the mould. The light passing through cannot be used well for measuring the intensity, because the starting material and the moulds have different transmission properties for the light, but the light passing through is quite suitable for use for identifying instances of contamination or mechanical changes on the mould.

Finally, in the case of a further advantageous embodiment, the moulding is produced in a synchronized production process. In the synchronized production process, at least two steps are provided, in each of which the starting material located in the mould is exposed to the light for a defined time period within a cycle. As a result, the cycle time can be reduced in particular if the total exposure time is significantly longer than the cycle times required for the other stations. This is because the longest cycle time determines the cycle time of the overall system, or special other measures have to be taken (provide buffer, etc.).

In particular, the apparatus according to the invention for producing mouldings, in particular ophthalmic lenses such as contact lenses for example, comprises a mould and a device for introducing into the mould a starting material which can be polymerized and/or crosslinked by means of exposure to light. Furthermore, the apparatus comprises a device for exposing the starting material located in the mould to light, in particular UV light, so that a demouldable moulding is produced, and a device for measuring the intensity of the light. To measure the intensity of the light, the device is designed and arranged in such a way that the intensity measurement takes place during the production of the mouldings.

Further, means are provided for transporting the mould to a position in which the mould is arranged in such a way that the light acts on the starting material located in the mould, and for transporting the mould away from this position after the exposure of the starting material to the light. The device for measuring the intensity of the light is designed and arranged in such a way that the intensity measurement takes place during the transporting of the mould into the position in which the starting material located in the mould is exposed to the light, or during the transporting of the mould away from this position.

An exemplary embodiment of the apparatus comprises means for the simultaneous exposure of a plurality of moulds to tight. The device for measuring the intensity of the light has a number and arrangement of sensors corresponding to the number and arrangement of the plurality of moulds. This exemplary embodiment is distinguished by efficiency; the intensity of the light can be determined immediately, after or before an exposure, without any additional effort.

In the case of a further exemplary embodiment, the means for simultaneously exposing a plurality of moulds to light comprise a mould tool in which a plurality of moulds are arranged. The device for exposing the starting material to light is designed in such a way that, for polymerization and/or crosslinking in all the moulds arranged in the mould tool, the starting material is simultaneously exposed to light.

In the case of a development of this exemplary embodiment, the mould tool is arranged on a base plate which has a clearance, and the device for measuring the intensity has a sensor which is arranged behind the clearance with respect to the light path and which is exposed to the light when the mould tool or the base plate is transported into the position in which the starting material located in the moulds is exposed to light or when the mould tool or the base plate is transported away from this position.

In the case of a further exemplary embodiment, the apparatus has a light source and in each case a separate supply line, which transports the light from the light source to the mould in which the starting material is located.

In the case of a development, the supply line comprises a light guide on which the light-exiting end is arranged in such a way that the light emerging from the light guide acts on the starting material located in the respective mould.

In turn in the case of a development, the device for measuring the intensity of the light comprises a sensor for each individual supply line for the separate measurement of the intensity of the light transported to the respective mould.

In the case of a further exemplary embodiment, the apparatus comprises as a light source a lamp operated on alternating current, preferably a mercury UV lamp. The device for measuring the intensity is designed in such a way that an even number of half-periods is taken into account in each case in the measurement of the intensity, over the time period of which half-periods the momentary values of the intensity are added up and this is subsequently divided by the time period.

In the case of a further exemplary embodiment, the device for measuring the intensity is designed in such a way that, in addition to the intensity of the light, it also determines the total amount of the light which acts on the starting material located in the mould.

In turn in the case of a further exemplary embodiment, the device for measuring the intensity generates a warning signal whenever the measured intensity and/or the specific total amount of the light goes above a first upper threshold value or goes below a first lower threshold value. Whenever the measured intensity and/or the specific total amount of the light goes above a second upper threshold value or goes below a second lower threshold value, it generates a fault signal.

In the case of a further exemplary embodiment, the apparatus comprises a plurality of stations and a clock-pulse-controlled drive, which transports the mould under clock-pulse control to the next station respectively, so that the moulding is produced in a synchronized production process. In this case, at least two stations are provided, which respectively comprise a device for exposing the starting material located in the mould to light and in which the starting material located in the mould is exposed to light for a defined time period within a cycle.

The advantages of the individual exemplary embodiments of the apparatus described above correspond to the advantages already stated further above of the respectively corresponding embodiments of the method. Further advantages emerge from the exemplary embodiments as they are described below on the basis of the drawing, in which:
- Figure 1: shows an exemplary embodiment of a cyclical, synchronized process for the production of contact lenses,
- Figures 2-4: show an exemplary embodiment of a mould tool for producing contact lenses, in the opened state and after closing of the mould tool,

- Figure 5: shows an exemplary embodiment of the way in which the light from a UV lamp is coupled into a light guide,
- Figure 6: shows an exemplary embodiment of the way in which the light emerges from the light guide and acts on the mould,
- Figure 7: shows an exemplary embodiment of a device for exposing the starting material located in the mould to UV light,
- Figure 8: shows an exemplary embodiment of a closed mould tool on a base plate for transporting the mould tool under the light-exiting ends of light guides, and also a corresponding measuring device for measuring the intensity of the UV light emerging from the light guide,
- Figure 9: shows an exemplary embodiment of an attenuator of the measuring device for measuring the UV light,
- Figure 10: shows the attenuator from Figure 10 in an exploded representation,
- Figure 11: shows an exemplary embodiment of a measuring device for measuring the UV light in plan view,
- Figure 12: shows a detail of the time characteristic of the intensity of the UV light within the time window in which the intensity is measured,
- Figure 13: shows a schematic representation of the communication model of the measuring device for measuring the UV light
and
- Figure 14: shows a further configurational embodiment of an arrangement with light guides for exposing the starting material located in the moulds to UV light and also with a device for measuring the UV light emerging from the light guides.

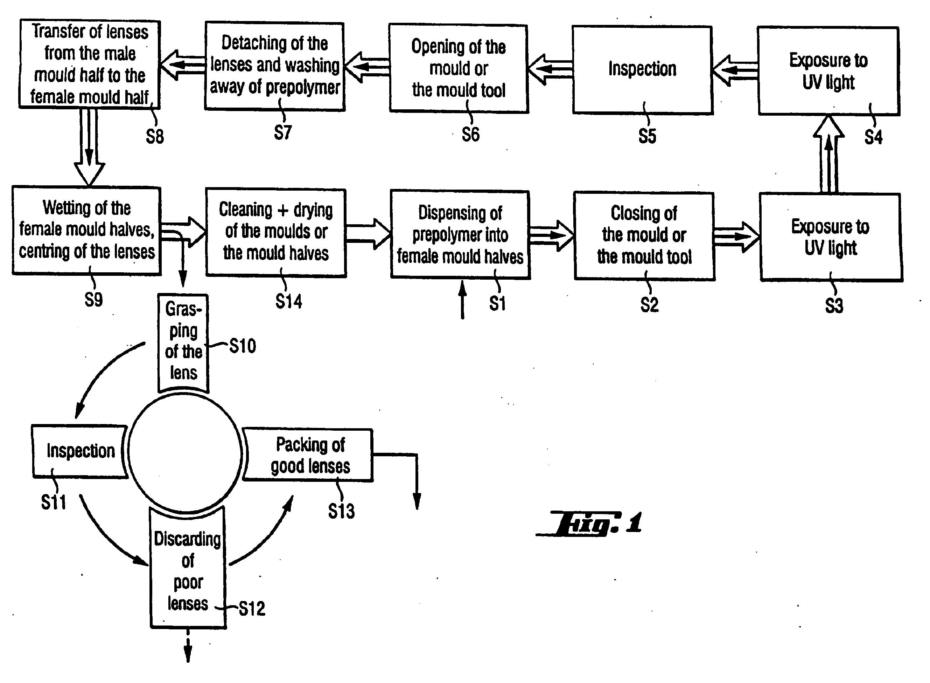

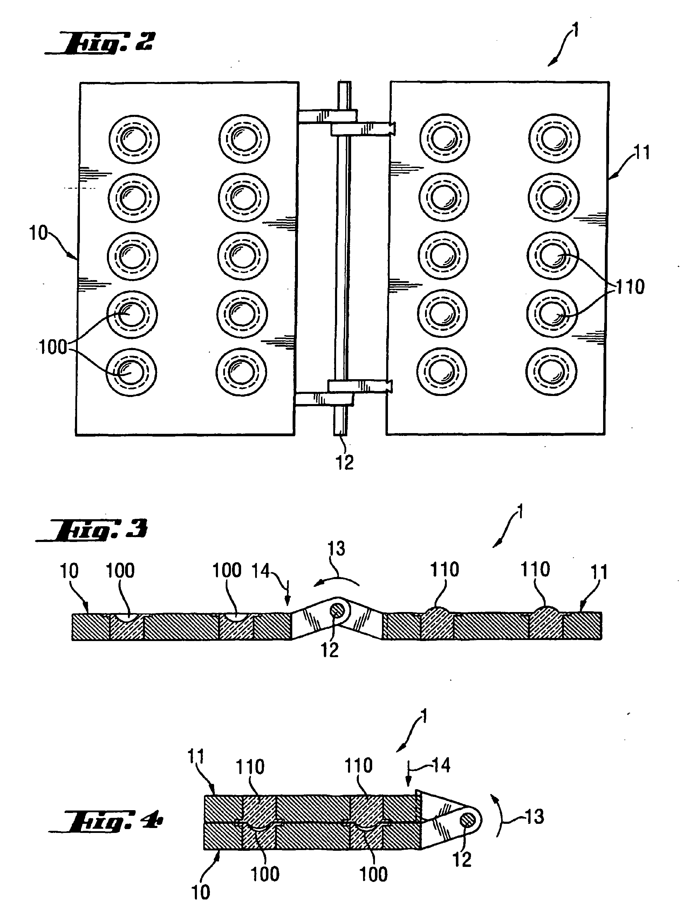

In Figure 1, an exemplary embodiment of a cyclical synchronized process for the production of contact lenses can be seen. In a first step S1 of this cyclical synchronized process, the starting material, for example the prepolymer already mentioned at the beginning, is dispensed into the female mould half or into a plurality of female mould halves. For example, a mould tool 1 such as that represented in Figure 2, with two tool halves 10 and 11, may be used. In one tool half 10, a number of female mould halves 100, for example ten such female mould halves 100 are arranged. In the other tool half 11, a number of male mould halves 110 corresponding to the number of female mould halves 100, in the case represented ten male mould halves 110, are arranged.

In the following step S2, the mould tool 1 is closed, the closing taking place firstly by a pivoting movement of the mould half 11 about the axis 12, as indicated by the arrow 13 in Figure 3, and subsequently by a straight movement, as indicated by the arrow 14 in Figure 3. The mould tool 1 is then in the closed state, as represented in Figure 4.

The male mould halves 110 and the female mould halves 100, or the relevant parts thereof, are transparent to UV light. In a third step S3, the starting material located in the cavity - that is in the space between the male mould half 110 and the female mould half 100 - is exposed to UV light, which results in a polymerization and/or crosslinking of the starting material. In a fourth step S4, the same process takes place once again. The main reason for choosing two exposure steps S3 and S4 or exposing stations is that the cycle time of the cyclical process can be shortened by this measure. This is because, in principle, the slowest step determines the cycle time. On the other hand, it is necessary to expose the starting material to UV light of a specific intensity for a specific time period in order to ensure adequate polymerization and/or crosslinking of the starting material.

In a subsequent step S5, with the mould tool 1 still closed, a first inspection of the contact lenses located in the moulds is carried out. In this step S5, for example, the central region of the contact lenses may be investigated for inclusions or other relatively gross, easily perceptible defects.

In the next-following step S6, the mould tool 1 is opened again, which takes place in the reverse sequence as compared to the operation of closing the mould, which was described in step S2.

In the next step S7, the male and female mould halves 110, 100 are sprayed with water, for example, to effect detachment of the contact lenses and on the other hand wash away excess uncrosslinked prepolymer from the contact lens and/or the mould half.

In the following step S8, an automatic transfer of the contact lenses from the male mould half 110 to the female mould half 100 takes place. Although in many cases the contact lens already remains in the female mould half 100 when the mould tool 1 is opened, in the majority of cases it remains adhering to the male mould half 110. Since, however, it must be ensured for the automated steps which follow that the contact lens is located in the female mould half 100, an automatic transfer of the contact lenses from the male mould half to the female mould half is carried out in step S8. In the cases in which the contact lens is already located in the female mould half, a transfer is attempted, but since in these cases the contact lens is already located in the female mould half no transfer takes place. After step S8, it is ensured in any event that the contact lenses are located in the female mould half.

In step S9, the female mould halves 100 are wetted, for example with water, which makes it easier for the contact lens to be centred in the female mould half 100, because this allows the contact lens to slide more easily into the centre of the female mould half 100. The centring of the lens is in turn of significance for the following step S10, because in this step the contact lens is grasped from the female mould half.

While the grasped contact lenses are inspected in a cyclical (secondary) process in a step S11 after the grasping has taken place in step S10, in particular including to check whether the rim of the contact lens is satisfactory, in a step S13 the satisfactory contact lenses are introduced into a package, which if need be may contain a storing solution (for example saline solution). Contact lenses which are not satisfactory, on the other hand, are discarded in a step S12.

Once the contact lenses have been removed from the female mould halves 100 in step S10, the mould tool 1, or the mould halves 100 and 110 arranged in the tool halves 10 and 11, can be cleaned, with water for example, in the cyclical (main) process in a step S14, and the cyclical (main) process can subsequently begin a renewed cycle again with the step S1, the dispensing of prepolymer into the female mould halves 100.

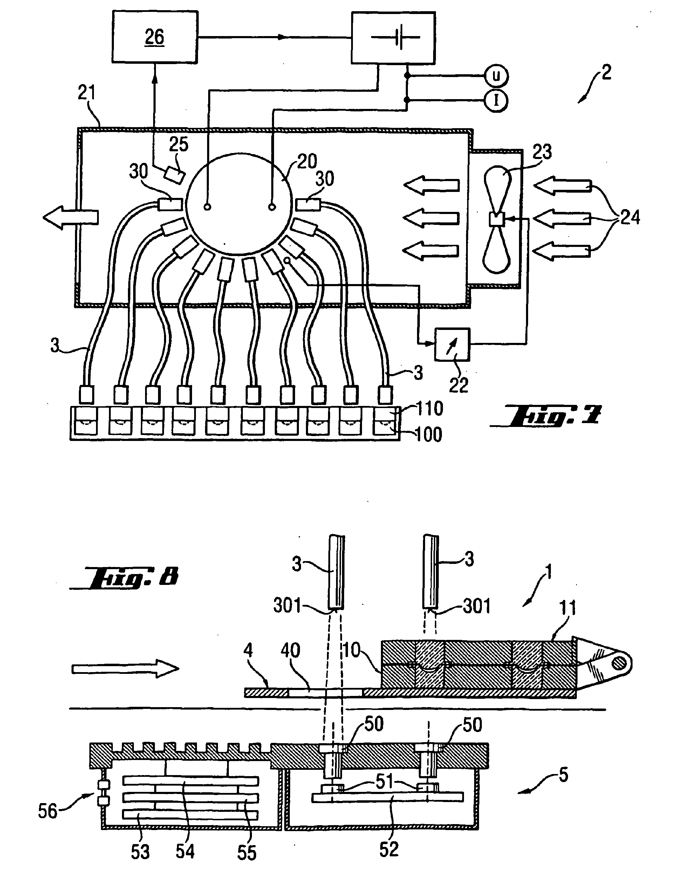

Figure 7 reveals a device 2 for exposing the starting material located in the mould to UV light which can be used in the previously described production process in steps S3 and S4 for exposing the starting material to UV light for the purpose of polymerization and/or crosslinking of the starting material. The device 2 comprises a UV lamp 20 (operated on alternating voltage or alternating current), which is arranged in a housing 21. A plurality of light guides 3 - here for example ten of them - are provided, are arranged around the UV lamp 20 with aid of a respective holder 30 and transport the light emitted by the lamp 20 to the individual moulds, which, for the sake of better overall clarity, are represented here all arranged next to one another. The light guides 3 are described in somewhat more detail below.

Figure 7 also further reveals a temperature sensor 22, which measures the temperature near the surface of the UV lamp 20 and, if it goes above a specific temperature, activates a fan 23, which sucks in cooling air 24 and passes it through the housing 21. What is more, a sensor 25 for measuring the intensity of the UV light may be provided, which sensor passes on a corresponding signal to a controller 26, which sets the UV lamp 20 in such a way that a specific desired intensity of the UV light is provided as a general setpoint selection.

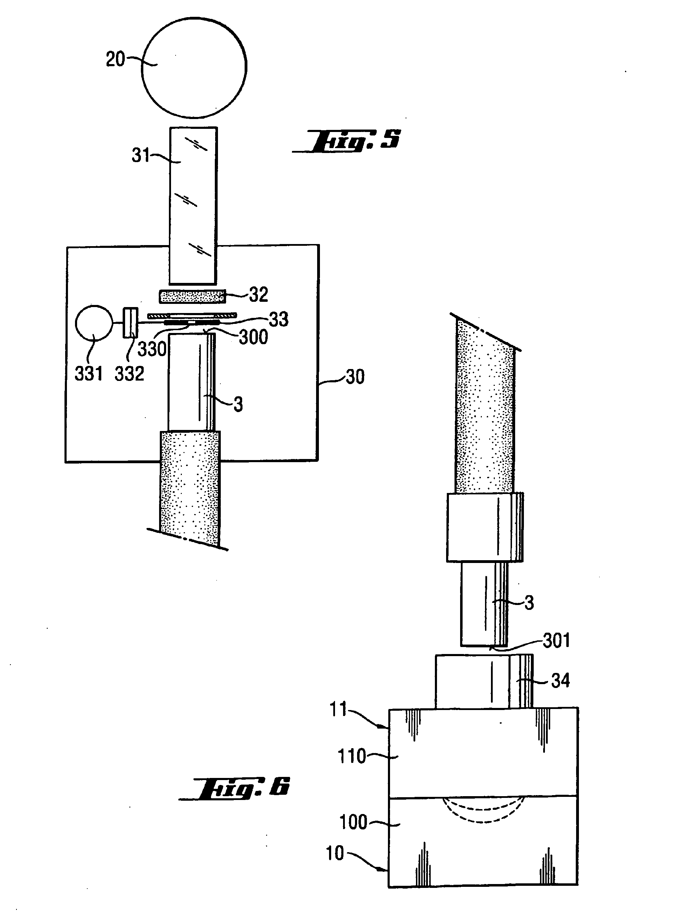

Represented in Figure 5 is an exemplary embodiment of the way in which the light from a UV lamp 20 is coupled into the light-entering end 300 of a light guide 3, which then guides the UV light to the respective mould. The complete supply line for transporting the UV light from the UV lamp 20 comprises not only the actual light guide 3 but also a quartz rod 31, a filter 32, and a motor-operated adjustable diaphragm 33. The size of the diaphragm aperture 330 is in this case adjustable by means of a motor 331 and a flexible coupling 332. Arranged downstream of the diaphragm 33 in the light path is the light guide 3, which is designed here as a liquid light guide. Liquid light guides are particularly suitable for guiding UV light, but do not withstand temperatures as high as those which prevail in the direct vicinity of the UV lamp 20. For this reason, the quartz rod 31 is provided, which although not flexible, withstands the temperatures in the direct vicinity of the UV lamp 20 and also conducts UV light well. Consequently, the previously described coupling of the UV light into the respective light guide 3 takes place in the holder 30, and the said light guide then guides the UV light to the respective mould. The filter 32 in this case blocks light components below a lower cut-off wavelength. Such a filter 32 is beneficial because, on the one hand, the blocked short wavelengths can lead to accelerated aging of the liquid light guides 3 and, on the other hand, by blocking the short wavelengths, the filter 32 also prevents polymer degradation of the contact lens material.

Figure 6 reveals an exemplary embodiment of the way in which the UV light emerges from the light guide 3 and acts on the mould. The UV light emerging from the light-exiting end 301 of the light guide 3 acts - here through a condenser 34 - on the starting material located in the mould between the male mould half 110 and the female mould half 100, so that a contact lens as represented by dashed lines in Figure 6 is formed.

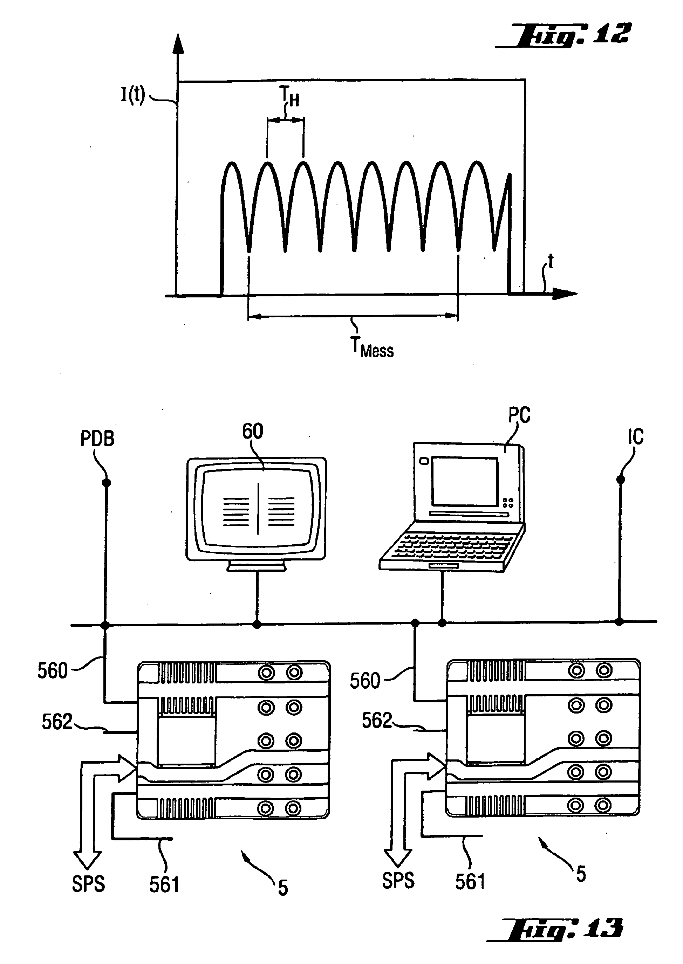

Figure 8 reveals an exemplary embodiment of a closed mould tool 1 with the mould halves 10 and 11 on a base plate 4 for transporting the mould tool 1 under the light-exiting ends of light guides 3, and also a corresponding measuring device 5 for measuring the intensity of the UV light emerging from the light guides 3. The light guides 3 are arranged in such a way that, in the position of rest of the base plate 4 within a cycle, the emerging UV light acts on the starting material through the male mould half 110 arranged in the tool half 11.
During the transporting away of the base plate 4 together with the mould tool 1 after exposure, a gap 40 provided in the base plate 4 comes to lie between the light guides 3 and the measuring device 5 (this could of course alternatively take place while it is being transported into position, given an appropriate configuration of the base plate 4 - arrangement of the gap 40). The UV light emerging from the light-exiting ends 301 of the light guides 3 then acts through attenuators 50 on light-sensitive sensors 51, which are arranged on a detector plate 52. During the rest position of the base plate 4 - that is during the exposure of the starting material in the mould to UV light within a cycle - the UV light passing through the female mould half 100 arranged in the tool half 10 is likewise received by the measuring device 5. Since, however, this transmitted light is only suitable to a restricted extent for intensity measurement, it can be used for example to check the mould for instances of contamination, etc. Furthermore, the measuring device 5 also comprises an electronics part, in which a main printed circuit board 53, a processing printed circuit board 54 and an analog/digital printed circuit board 55 are provided. On the front panel 56 there may be provided, in particular, a network connection 560 (see Figure 13, for example Ethernet), a serial interface 561 (see Figure 13, for example RS 232) and a connection for the voltage supply 562 (see Figure 13), as well as an interface for data transmission to the system process controller (SPS) and a status indicator of the unit.

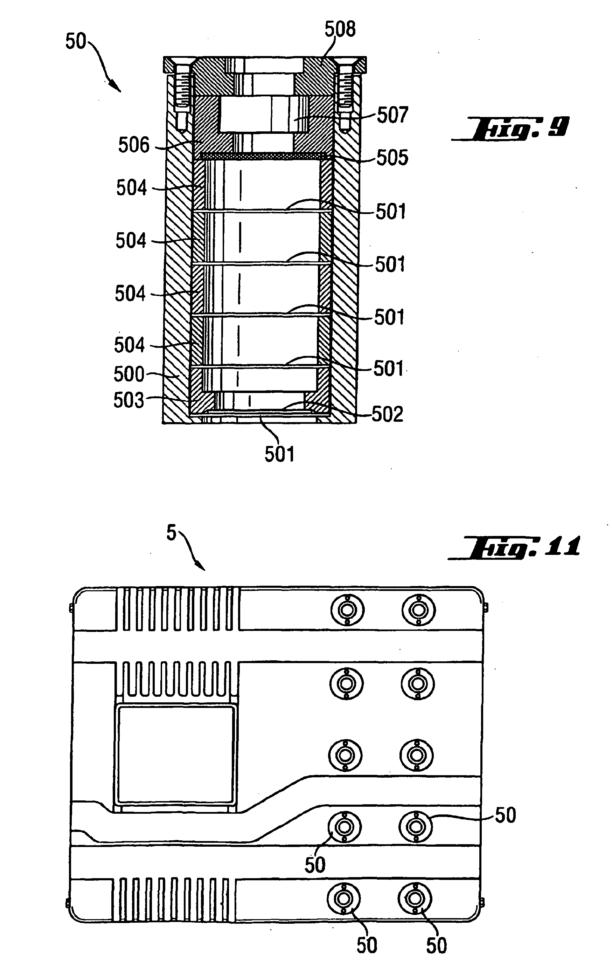

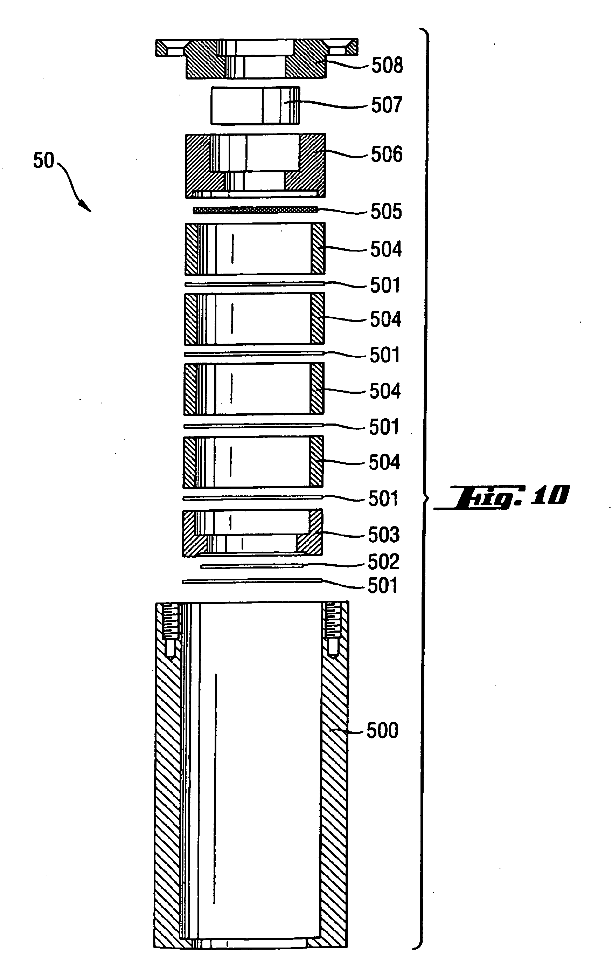

Figure 11 shows a plan view of such a measuring device 5. It can be seen that there are two columns and five rows, in each of which an attenuator 50 and, downstream from it in the light path, a corresponding sensor 51 (not represented) are provided. Such an attenuator 50 is shown in conjunction with Figure 9 and in an exploded representation in Figure 10. It comprises a basic body 500, a plurality of perforated discs 501 for the geometrical delimitation of the light beam which is intended to act on the sensor, a diaphragm 502 for attenuating the light, a diaphragm holder 503, a plurality of spacer rings 504, a metal gauze plate 505 for attenuating the light, a receptacle 506 for a filter 507 for limiting the wavelength of the light, and also a cover 508.

The light-exiting ends 301 of the light guides 3 (not represented in Figure 11) are arranged exactly over the attenuators 50. In the rest position of the base plate 4, the light-exiting ends 301 of the light guides 3 come to lie exactly centrally over the respective male mould half 110, or the respective male mould half 110 comes to lie exactly centrally below a light guide 3, so that UV light emerging from the light guide 3 acts on the starting material located in the mould. After this exposure has taken place, the base plate 4 is transported away, with the light impinging on the attenuators 50 (see Figure 8) for a specific time period ("time window") through the gap 40 in the base plate 4 during this transporting away of the base plate 4.

This "time window", or the segment Tₘₑₐₛ from this time window, which is determined by the speed at which the base plate 4 is transported and by the geometrical dimensions of the gap 40, is used for measuring the intensity I of the UV light emerging from the light-exiting ends 301 of the light guides 3. A highly idealized time characteristic of the intensity I(t) over the time t is represented in Figure 12.

It should be noted in this respect that the UV lamp 20 (Figure 7) is activated by alternating current (for example at the mains frequency of 50 Hz). The duration T_{H} of a half-period at a frequency of 50 Hz is correspondingly 10 ms. In addition, it should be noted that the amplitudes of individual half-periods are in reality often not as uniform as they are represented in Figure 12, but instead, for example, the amplitude of every second half-period is less than the amplitude of the respective first half-period, in other words the UV lamp 20 "does not shine symmetrically". To determine "the" intensity I of the UV light emerging from the light guides 3, the characteristic at a particular time of the intensity I(t) is sampled with a frequency of 20 kHz (corresponding time intervals 50 µm), added together over an even number of half-periods (as it were corresponding to an integration, although with a time-limited resolution) and subsequently divided by the time period of the recorded even number of periods, whereby an average value over time is obtained as the intensity I, which is then representative of "the" intensity of the UV light which emerges from the light-exiting ends 301 of the light guides 3. If a sufficiently large number of half-periods are recorded, the fluctuations in the amplitude are also sufficiently taken into account in the determination of the intensity, so that "the" intensity also actually represents a very representative value for the UV light emerging from the light guides 3. So, when reference is made to the intensity of the UV light emerging from the light guides 3, this is taken to mean the average intensity - determined as described above - not the respective individual momentary value in time of the intensity I(t) at any desired point in time.

In the case of the cyclical process described at the beginning on the basis of Figure 1, two such measuring devices 5 are provided, because an exposure of the starting material to UV light takes place both in step S3 and in step S4, in order to shorten the cycle time. That is to say of course that an appropriate measurement of the intensity, which may take place in each case as described above, is correspondingly also required in the case of both steps S3 and S4.

Represented as a detail in Figure 13 is an exemplary embodiment of the communication model of two measuring devices 5, as may be provided for example in steps S3 and S4 (Figure 4). The measuring devices 5 may pass on the respectively measured intensities to the system process controller SPS (which is only symbolized by the arrows) and pass on the respective intensities of individual "channels" via the network connection 560 (for example Ethernet) also for a graphic representation on a screen 60. The configuration or the calibration of the measuring devices 5 may take place via the serial interface 561 (example RS 232). Furthermore, a process data manager PDB, in the database of which fault data can be entered for example, is provided. With the aid of an intensity control IC, it is possible, if required, for the intensity to be controlled (for example in individual "channels"). The computer PC represented may be used for analysis, diagnosis and service purposes. Finally, the respective voltage supply 562 can also be seen.

While the respective intensity I is determined in the individual measuring devices "channel by channel", both the amount of light in each individual exposing station and the total amount of UV light which acts on the starting material in the two individual exposing stations are additionally determined "channel by channel". To determine the total amount of light, the individual amounts of light are likewise added together "channel by channel". The respective amount of light which acts on the starting material in the individual exposing station is determined by multiplying the intensity I measured by the measuring devices 5 by the time period over which the starting material is exposed to the UV light in the respective exposing station.

If the measured intensity I for an individual "channel" in an individual measuring device 5 lies above a first upper threshold value or below a first lower threshold value for the intensity, a warning signal is generated. A warning signal is also generated if the total amount of UV light goes above a first upper threshold value for the total amount of UV light or goes below a first lower threshold value. If the intensity I lies above a second threshold value or below a second threshold value, a fault signal is generated and suitable measures are initiated. The same also applies to the total amount of light.

In this connection, suitable measures may be that - while production continues, for example because the fault occurs only in one "channel" - the contact lenses produced in this channel are discarded and at the same time the intensity is controlled in such a way that the intensity or the overall amount of light again lies within the respective desired range. If, on the other hand, the fault occurs in a relatively large number of "channels", a suitable measure may also be that the production process is stopped and the fault is rectified before production is resumed. The respective strategy as to what constitutes a suitable measure in respect of which event can preferably be prescribed.

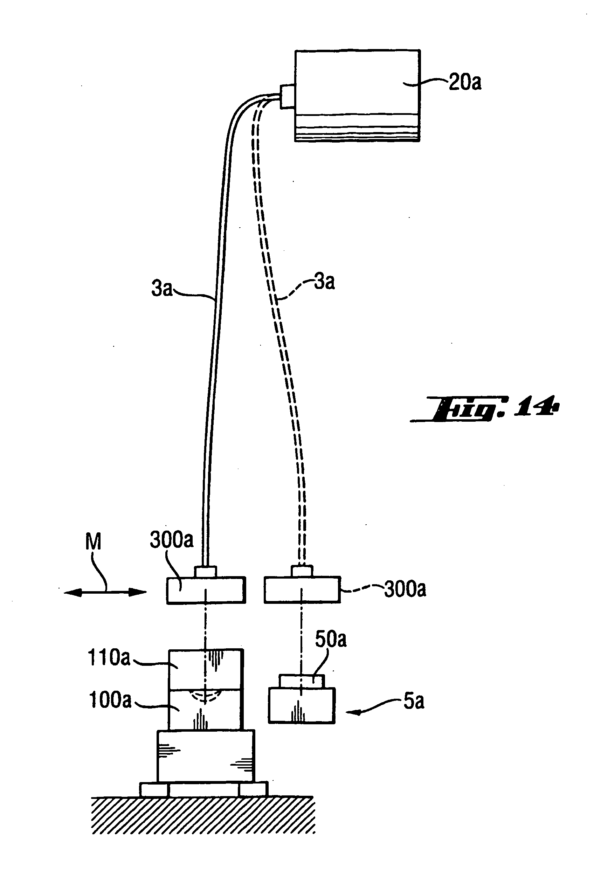

Shown in Figure 14 is a further configurational embodiment, as can be used for example for the production of contact lenses. Figure 14 reveals here a view of an arrangement which comprises both the UV lamp 20a and light guides 3a, which guide the UV light emerging from the UV lamp 20a to the light-exiting ends of the light guides 3a arranged in a condenser plate 300a. The UV light emerges from these light-exiting ends of the light guides 3a and acts in each case through the male mould half 110a on the starting material located in the respective mould for the contact lens and thereby effects the desired polymerization and/or crosslinking. The starting material has been introduced, for example before the closing of the mould, in a suitably metered amount into the female mould half 100a.

The measuring device 5a may be designed in principle in the same way as the measuring device 5 already described further above. Since the moulds are transported one behind the other in a series (for example in the direction out of the plane of the drawing), an arrangement of the measuring device 5a laterally parallel to the transporting line is possible.

For measuring the intensity of the light emerging from the light-exiting end of the light guides 3a, the condenser plate 300a, in which the light-exiting end of the light guides 3a is arranged, may be moved out of the (exposing) position, in which the starting material located in the mould for the contact lenses is exposed to UV light, in the lateral direction (arrow M) into a measuring position, so that the light-exiting ends of the light guides 3a are arranged exactly over the attenuators 50a of the measuring device 5a. In this measuring position, the intensity measurement then takes place, it being possible for it to be performed in the same way as already described at length further above. Following the intensity measurement, the condenser plate 300a is moved back again into the (exposing) position (arrow M).

In the case of synchronized transport, the condenser plate may be moved laterally during the transport of the moulds, so that the light-exiting ends of the light guides 3a are arranged above the attenuators 50a of the measuring device 5a and the intensity measurement takes place. Following the intensity measurement, the condenser plate 300a is moved back again into its starting position and is consequently available again for the exposure of a new mould.

In a further configurational embodiment, groups of two or more moulds may be transported together. In accordance with the number of moulds in such a group, laterally parallel to the transport line there are a corresponding number of sensors (not represented here), attenuators 50a, etc., and the corresponding number of light guides 3a are moved sideways for the intensity measurement. Since, given the same transporting speed, the transporting time increases with an increasing number of moulds in a (transport) group, a longer measuring time is also available in comparison with the transporting of individual moulds.

## Claims

1. Method for producing mouldings, in particular ophthalmic lenses, such as contact lenses for example, in which a starting material located in a mould (100, 110; 100a, 110a) is polymerized and/or crosslinked by means of exposure to light, In particular by exposure to UV light, so that a demouldable moulding is produced, and in which method the intensity (I) of the light is measured during the production of the mouldings,
wherein the mould is transported to a position in which the starting material located in the mould (100, 110; 100a, 110a) is exposed to the light, and in which method, after the exposure of the starting material to the light, the mould (100, 110; 100a, 110a) is transported away again from this position, the measurement of the intensity (I) of the light taking place during the transporting of the mould (100, 110; 100a, 110a) into the position in which the starting material located in the mould (100, 110; 100a, 110a) is exposed to the light or during the transporting of the mould (100, 110; 100a, 110a) away from this position.

2. Method according to Claim 1, in which method a plurality of moulds (100, 110; 100a, 110a) are used simultaneously and the starting material located in these moulds (100, 110: 100a, 110a) is exposed to light simultaneously, and in which method a measurement of the intensity (I) takes place before or after the exposure of the starting material to light, but before or after starting material in further moulds is exposed.

3. Method according to one of the preceding claims, in which the light is transported from a light source (20; 20a) to the mould (100, 110; 100a, 110a) in which the starting material is located by a separate supply line (3, 30, 31, 32, 33; 3a) in each case, and
wherein the intensity (I) of the light transported to the mould (100, 110; 100a, 110a) is measured separately for each individual supply line.

4. Method according to one of the preceding claims, in which a lamp operated on alternating current, preferably a mercury UV lamp 20; 20a), is used as the light source, and in that an even number of half-periods (T_{H}) is taken into account in each case in the measurement of the intensity, over the time period of which half-periods the momentary values (I(t)) of the intensity are added up and subsequently divided by this time period.

5. Method according to one of the preceding claims, in which the total amount of the light which acts on the starting material located in the mould (100, 110; 100a, 110a) is determined in addition to the measurement of the intensity (I) of the light.

6. Apparatus for producing mouldings, in particular ophthalmic lenses such as contact lenses for example, with a mould (100, 110; 100a, 110a) and a device for introducing into the mould (100, 110; 100a, 110a) a starting material which can be polymerized and/or crosslinked by means of exposure to light, and also with a device (2) for exposing the starting material located in the mould (100, 110; 100a, 110a) to light, in particular UV light, so that a demouldable moulding is produced, and with a device (5; 5a) for measuring the intensity (I) of the light, **characterized in that**, to measure the intensity of the light, the device (5; 5a) is designed and arranged in such a way that the intensity measurement takes place during the production of the mouldings, wherein apparatus means (4; 101 a, 102a, 103a) are provided for transporting the mould (100, 110; 100a, 110a) to a position in which the mould (100, 110; 100a, 110a) is arranged in such a way that the light acts on the starting material located in the mould (100, 110; 100a, 110a), and for transporting the mould (100, 110; 100a, 110a) away from this position after the exposure of the starting material to the light, the device (5; 5a) for measuring the intensity (I) of the light being designed and arranged in such a way that the intensity measurement takes place during the transporting of the mould (100, 110; 100a, 110a) into the position in which the starting material located in the mould (100, 110; 100a, 110a) is exposed to the light, or during the transporting of the mould (100, 110; 100a, 110a) away from this position.

7. Apparatus according to Claim 6, which comprises means for the simultaneous exposure of a plurality of moulds (100, 110; 100a, 110a) to light, and in which the device (5; 5a) for measuring the intensity of the light has a number and arrangement of sensors (51) corresponding to the number and arrangement of the number of moulds (100, 110; 100a, 110a), wherein the means for simultaneously exposing a plurality of moulds to light comprise a mould tool (1, 10, 11), in which a plurality of moulds (100, 110) are arranged, and in which apparatus the device (2) for exposing the starting material to light is designed in such a way that, for polymerization and/or crosslinking in all the moulds (100, 110) arranged in the mould tool (1, 10, 11), the starting material is simultaneously exposed to light.

8. Apparatus according to Claim 7, in which the mould tool (1, 10, 11) is arranged on a base plate (4) which has a clearance (40), and in which the device (5) for measuring the intensity has a sensor (51) which is arranged behind the clearance (40) with respect to the light path and which is exposed to the light when the mould tool (1, 10, 11) is transported into the position in which the starting material located in the moulds (100, 110) is exposed to light, or when the mould tool (1, 10, 11) is transported away from this position.

9. Apparatus according to one of the preceding claims 6 to 8, which has a light source (20; 20a) and in each case a separate supply line. (3, 30, 31, 32, 33; 3a), which transports the light from the light source (20; 20a) to the moulds (100, 110; 100a, 110a) in which the starting material is located, and in which the device (5) for measuring the intensity (I) of the light comprises a sensor (51) for each individual supply line for the separate measurement of the intensity (I) of the light transported to the respective mould (100, 110).

10. Apparatus according to one of Claims 6 to 9, with a plurality of stations and a clock-pulse-controlled drive, which transports the mould (100, 110; 100a, 110a) under clock-pulse control to the next station respectively, so that the moulding is produced in a synchronized production process, at least two stations (S3, S4) being provided, which respectively comprise a device (2) for exposing the starting material located in the mould (100, 110; 100a, 110a) to light and in which the starting material located in the mould (100, 110; 100a, 110a) is exposed to light for a defined time period within a cycle.

## Patentansprüche

1. Verfahren zur Herstellung von Formkörpern, insbesondere von ophthalmischen Linsen wie z.B. Kontaktlinsen, bei welchem ein in einer Form (100,110;100a,110a) befindliches Ausgangsmaterial mittels Beaufschlagung mit Licht polymerisiert und/oder vernetzt wird, insbesondere durch Beaufschlagung mit UV-Licht, sodass ein entformbarer Formkörper entsteht, und bei welchem Verfahren die Intensität (I) des Lichts während der Herstellung der Formkörper gemessen wird, wobei die Form zu einer Position hin transportiert wird, in welcher das in der Form (100, 110; 100a, 110a) befindliche Ausgangsmaterial von dem Licht beaufschlagt wird, und bei welchem Verfahren die Form (100,110; 100a,110a) nach der Beaufschlagung des Ausgangsmaterials mit dem Licht wieder aus dieser Position abtransportiert wird, wobei die Messung der Intensität (I) des Lichts während des Hintransports der Form (100,110; 100a,110a) in die Position, in welcher das in der Form (100,110;100a,110a) befindliche Ausgangsmaterial von dem Licht beaufschlagt wird, erfolgt, oder während des Abtransports der Form (100,110; 100a,110a) aus dieser Position.

2. Verfahren gemäss Anspruch 1, bei welchem Verfahren mehrere Formen (100,110;100a,110a) gleichzeitig verwendet werden und das in diesen Formen (100,110;100a,110a) befindliche Ausgangsmaterial gleichzeitig mit Licht beaufschlagt wird, und bei welchem Verfahren vor oder nach der Beaufschlagung des Ausgangsmaterials mit Licht die Messung der Intensität (I) erfolgt, jedoch bevor bzw. nachdem eine Beaufschlagung von Ausgangsmaterial in weiteren Formen erfolgt.

3. Verfahren nach einem der vorangehenden Ansprüche, bei welchem das Licht von einer Lichtquelle (20;20a) durch jeweils eine separate Zuleitung (3,30,31,32,33;3a) zu der Form (100,110; 100a,110a) transportiert wird, in welcher sich das Ausgangsmaterial befindet, und wobei für jede einzelne Zuleitung die Intensität (I) des zu der Form (100,110; 100a,110a) transportierten Lichts separat gemessen wird.

4. Verfahren nach einem der vorangehenden Ansprüche, bei welchem als Lichtquelle eine mit Wechselstrom betriebene Lampe, vorzugsweise eine Quecksilber-UV-Lampe (20;20a), verwendet wird, und dass bei der Messung der Intensität (I) jeweils eine gerade Anzahl von Halbperioden (T_{H}) berücksichtigt wird, über deren Zeitdauer hinweg die Momentanwerte (I(t)) der Intensität aufsummiert und anschliessend durch diese Zeitdauer dividiert werden.

5. Verfahren nach einem der vorangehenden Ansprüche, bei welchem zusätzlich zu der Messung der Intensität (I) des Lichts auch die Gesamtmenge des Lichts bestimmt wird, die das in der Form (100,110; 100a,110a) befindliche Ausgangsmaterial beaufschlagt.

6. Vorrichtung zur Herstellung von Formkörpern, insbesondere von ophthalmischen Linsen wie z.B. Kontaktlinsen, mit einer Form (100,110;100a,110a), und mit einer Einrichtung zum Einbringen eines Ausgangsmaterials, welches mittels Beaufschlagung mit Licht polymerisierbar und/oder vernetzbar ist, in die Form (100,110; 100a,110a), sowie mit einer Einrichtung (2) zur Beaufschlagung des in der Form (100,110;100a,110a) befindlichen Ausgangsmaterials mit Licht, insbesondere UV-Licht, sodass ein entformbarer Formkörper entsteht, sowie mit einer Einrichtung (5;5a) zur Messung der Intensität (I) des Lichts, **dadurch gekennzeichnet, dass** zur Messung der Intensität (I) des Lichts die Einrichtung (5;5a) so ausgebildet und angeordnet ist, dass die Intensitätsmessung während der Herstellung der Formkörper erfolgt, wobei Mittel (4;101a,102a,103a) zum Transport der Form (100,110;100a,110a) zu einer Position hin vorgesehen sind, in welcher die Form (100,110;100a,110a) so angeordnet ist, dass das Licht das in der Form (100,110;100a,110a) befindliche Ausgangsmaterial beaufschlagt, und zum Abtransport der Form (100,110; 100a, 110a) aus dieser Position nach der Beaufschlagung des Ausgangsmaterials mit dem Licht, wobei die Einrichtung (5;5a) zur Messung der Intensität (I) des Lichts so ausgebildet und angeordnet ist, dass die Intensitätsmessung während des Hintransports der Form (100,110; 100a,110a) in die Position, in welcher das in der Form (100,110;100a,110a) befindliche Ausgangsmaterial von dem Licht beaufschlagt wird, erfolgt, oder während des Abtransports der Form (100,110; 100a, 110a) aus dieser Position.

7. Vorrichtung gemäss Anspruch 6, welche Mittel zur gleichzeitigen Beaufschlagung von mehreren Formen (100,110; 100a,110a) mit Licht umfasst, und bei welcher die Einrichtung (5;5a) zur Messung der Intensität des Lichts eine der Anzahl und Anordnung der mehreren Formen (100,110; 100a,110a) entsprechende Anzahl und Anordnung von Sensoren (51) aufweist, wobei die Mittel zur gleichzeitigen Beaufschlagung von mehreren Formen mit Licht ein Formwerkzeug (1,10,11) umfassen, in welchem mehrere Formen (100,110) angeordnet sind, und bei welcher Vorrichtung die Einrichtung (2) zur Beaufschlagung des Ausgangsmaterials mit Licht so ausgebildet ist, dass das Ausgangsmaterial zur Polymerisation und/oder Vernetzung in sämtlichen in dem Formwerkzeug (1,10,11) angeordneten Formen (100,110) gleichzeitig mit Licht beaufschlagt wird.

8. Vorrichtung gemäss Anspruch 7, bei welcher das Formwerkzeug (1,10,11) auf einer Grundplatte (4) angeordnet ist, welche eine Aussparung (40) aufweist, und bei welcher die Einrichtung (5) zur Messung der Intensität einen Sensor (51) aufweist, der in Bezug auf den Lichtweg hinter der Aussparung (40) angeordnet ist und der beim Hintransport des Formwerkzeugs (1,10,11) in die Position, in welcher das in den Formen (100,110) befindliche Ausgangsmaterial mit Licht beaufschlagt wird, oder beim Abtransport des Formwerkzeugs (1,10,11) aus dieser Position, von dem Licht beaufschlagt wird.

9. Vorrichtung nach einem der vorangehenden Ansprüche 6 bis 8, welche eine Lichtquelle (20;20a) und jeweils eine separate Zuleitung (3,30,31,32,33;3a) aufweist, welche das Licht von der Lichtquelle (20;20a) zu der Form (100,110; 100a,110a) transportiert, in welcher sich das Ausgangsmaterial befindet, und bei welcher die Einrichtung (5) zur Messung der Intensität (I) des Lichts einen Sensor (51) für jede einzelne Zuleitung umfasst zur separaten Messung der Intensität (I) des zu der jeweiligen Form (100,110) transportierten Lichts.

10. Vorrichtung nach einem der Ansprüche 6 bis 9, mit mehreren Stationen sowie mit einem getakteten Antrieb, welcher die Form (100,110; 100a,110a) getaktet zur jeweils nächsten Station transportiert, sodass der Formkörper in einem getakteten Herstellungsprozess hergestellt wird, wobei mindestens zwei Stationen (S3,S4) vorgesehen sind, die jeweils eine Einrichtung (2) zur Beaufschlagung des in der Form (100,110; 100a,110a) befindlichen Ausgangsmaterials mit Licht umfassen und in denen das in der Form (100,110; 100a,110a) befindliche Ausgangsmaterial für eine definierte Zeitdauer innerhalb eines Takts mit Licht beaufschlagt wird.

## Revendications

1. Procédé de production de moulages, en particulier de lentilles ophtalmiques, telles que les lentilles de contact par exemple, dans lequel un produit de départ situé dans un moule (100, 110 ; 100a, 110a) est polymérisé et/ou réticulé par exposition à de la lumière, en particulier par exposition à de la lumière UV, afin qu'un moulage démoulable soit produit, et dans lequel l'intensité (I) de la lumière est mesurée pendant la production des moulages, où le moule est amené à une position dans laquelle le produit de départ situé dans le moule (100, 110 ; 100a, 110a) est exposé à la lumière, et procédé dans lequel, après l'exposition du produit de départ à la lumière, le moule (100, 110 ; 100a, 110a) est écarté de cette position, la mesure de l'intensité (I) de la lumière ayant lieu pendant le transport du moule (100, 110 ; 100a, 110a) visant à l'amener dans la position dans laquelle le produit de départ situé dans le moule (100, 110 ; 100a, 110a) est exposé à la lumière ou pendant le transport du moule (100, 110 ; 100a, 110a) visant à l'écarter de cette position.

2. Procédé selon la revendication 1, dans lequel une pluralité de moules (100, 110 ; 100a, 110a) sont utilisés simultanément et le produit de départ situé dans ces moules (100, 110; 100a, 110a) est exposé à de la lumière simultanément, et procédé dans lequel une mesure de l'intensité (I) a lieu avant ou après l'exposition du produit de départ à de la lumière, mais avant ou après que du produit de départ dans d'autres moules soit exposé.

3. Procédé selon l'une des revendications précédentes, dans lequel la lumière d'une source lumineuse (20 ; 20a) est transmise au moule (100, 110 ; 100a, 110a) dans lequel se trouve le produit de départ, par une conduite d'amenée distincte (3, 30, 31, 32, 33; 3a) dans chaque cas, et dans lequel l'intensité (I) de la lumière transmise au moule (100, 110; 100a, 110a) est mesurée séparément pour chaque conduite d'amenée individuelle.

4. Procédé selon l'une des revendications précédentes, dans lequel une lampe fonctionnant sous courant alternatif, de préférence une lampe UV à mercure (20 ; 20a), est utilisée comme source lumineuse, et en ce qu'un nombre pair de demi-périodes (T_{H}) est pris en considération dans chaque cas dans la mesure de l'intensité, en l'espace de la période de temps desquelles demi-périodes les valeurs momentanées (I(t)) de l'intensité sont additionnées et, par la suite, divisées par cette période de temps.

5. Procédé selon l'une des revendications précédentes, dans lequel on détermine la quantité totale de la lumière qui agit sur le produit de départ situé dans le moule (100, 110 ; 100a, 110a), en plus de la mesure de l'intensité (I) de la lumière.

6. Appareil de production de moulages, en particulier de lentilles ophtalmiques telles que les lentilles de contact par exemple, ayant un moule (100, 110 ; 100a, 110a) et un dispositif permettant d'introduire dans le moule (100, 110 ; 100a, 110a) un produit de départ qui peut être polymérisé et/ou réticulé par exposition à de la lumière, et ayant également un dispositif (2) permettant d'exposer le produit de départ situé dans le moule (100, 110 ; 100a, 110a) à de la lumière, en particulier à de la lumière UV, afin de produire un moulage démoulable, et ayant un dispositif (5 ; 5a) permettant de mesurer l'intensité (I) de la lumière, **caractérisé en ce que**, pour mesurer l'intensité de la lumière, le dispositif (5 ; 5a) est conçu et disposé de manière à ce que la mesure de l'intensité ait lieu pendant la production des moulages, appareil dans lequel des moyens (4 ; 101 a, 102a, 103a) sont fournis pour amener le moule (100, 110 ; 100a, 110a) à une position dans laquelle le moule (100, 110 ; 100a, 110a) est disposé de manière à ce que la lumière agisse sur le produit de départ situé dans le moule (100, 110 ; 100a, 110a), et pour écarter le moule (100, 110 ; 100a, 110a) de cette position après l'exposition du produit de départ à la lumière, le dispositif (5 ; 5a) permettant de mesurer l'intensité (I) de la lumière étant conçu et disposé de manière à ce que la mesure de l'intensité ait lieu pendant le transport du moule (100, 110 ; 100a, 110a) visant à l'amener dans la position dans laquelle le produit de départ situé dans le moule (100, 110 ; 100a, 110a) est exposé à la lumière, ou pendant le transport du moule (100, 110 ; 100a, 110a) visant à l'écarter de cette position.

7. Appareil selon la revendication 6, qui comprend des moyens pour l'exposition simultanée d'une pluralité de moules (100, 110 ; 100a, 110a) à de la lumière, et dans lequel le dispositif (5 ; 5a) permettant de mesurer l'intensité de la lumière présente un certain nombre et une certaine disposition de capteurs (51) qui correspondent au nombre et à la disposition du nombre de moules (100, 110 ; 100a, 110a), dans lequel les moyens permettant d'exposer simultanément une pluralité de moules à de la lumière comprennent un outil à moules (1, 10, 11) dans lequel une pluralité de moules (100, 110) sont disposés, et appareil dans lequel le dispositif (2) permettant d'exposer le produit de départ à de la lumière est conçu de manière à ce que, pour une polymérisation et/ou une réticulation dans la totalité des moules (100, 110) disposés dans l'outil à moules (1, 10, 11), le produit de départ soit simultanément exposé à de la lumière.

8. Appareil selon la revendication 7, dans lequel l'outil à moules (1, 10, 11) est disposé sur une plaque d'appui (4) qui présente un évidement (40), et dans lequel le dispositif (5) permettant de mesurer l'intensité comporte un capteur (51) qui est disposé derrière l'évidement (40) par rapport à la trajectoire de la lumière et qui est exposé à la lumière lors du transport de l'outil à moules (1, 10, 11) visant à l'amener dans la position dans laquelle le produit de départ situé dans les moules (100, 110) est exposé à de la lumière, ou lors du transport de l'outil à moules (1, 10, 11) visant à l'écarter de cette position.

9. Appareil selon l'une des revendications 6 à 8 précédentes, qui comporte une source lumineuse (20 ; 20a) et, dans chaque cas, une conduite d'amenée distincte (3, 30, 31, 32, 33 ; 3a), qui transmet la lumière de la source lumineuse (20 ; 20a) au moule (100, 110 ; 100a, 110a) dans lequel se trouve le produit de départ, et dans lequel le dispositif (5) permettant de mesurer l'intensité (I) de la lumière comprend un capteur (51) pour chaque conduite d'amenée individuelle pour la mesure distincte de l'intensité (I) de la lumière transmise au moule respectif (100, 110).

10. Appareil selon l'une des revendications 6 à 9, ayant une pluralité de stations et un entraînement commandé par impulsion d'horloge, qui transporte le moule (100, 110; 100a, 110a), sous l'effet d'une commande à impulsion d'horloge, jusqu'à la station suivante respectivement, si bien que le moulage est produit dans un processus de production synchronisé, au moins deux stations (S3, S4) étant fournies, qui comprennent respectivement un dispositif (2) permettant d'exposer le produit de départ situé dans le moule (100, 110 ; 100a, 110a) à de la lumière et où le produit de départ situé dans le moule (100, 110 ; 100a, 110a) est exposé à de la lumière pendant une période de temps définie à l'intérieur d'un cycle.
